Europäisches Patentamt

European Patent Office

Office européen des brevets

(11) Publication number: **0 089 804**
**B1**

(12) **EUROPEAN PATENT SPECIFICATION**

(45) Date of publication of patent specification: **04.06.86**

(51) Int. Cl.⁴: **G 03 B 3/10, G 02 B 7/11**

(21) Application number: **83301457.4**

(22) Date of filing: **16.03.83**

(54) Focus state detector.

(30) Priority: **19.03.82 JP 45170/82**
**23.03.82 JP 46083/82**
**02.06.82 JP 94274/82**

(43) Date of publication of application:
**28.09.83 Bulletin 83/39**

(45) Publication of the grant of the patent:
**04.06.86 Bulletin 86/23**

(84) Designated Contracting States:
**AT BE CH DE FR GB IT LI NL SE**

(56) References cited:
**EP-A-0 010 241**
**DE-A-2 923 573**
**DE-A-2 946 185**
**FR-A-1 528 189**
**FR-A-2 344 046**
**FR-A-2 459 991**
**GB-A-1 477 625**
**US-A-3 356 854**
**US-A-3 975 631**
**US-A-4 314 150**

(73) Proprietor: **OLYMPUS OPTICAL CO., LTD.**
**43-2, 2-chome, Hatagaya Shibuya-ku**
**Tokyo 151 (JP)**

(72) Inventor: **Nishigaki, Shinichi Olympus Optical**
**Co. Ltd.**
**No. 43-2, Hatagaya 2-chome**
**Shibuya-ku Tokyo (JP)**
Inventor: **Matsuo, Kazumasa Olympus Optical**
**Co. Ltd.**
**No. 43-2, Hatagaya 2-chome**
**Shibuya-ku Tokyo (JP)**
Inventor: **Miyazaki, Atsushi Olympus Optical**
**Co. Ltd.**
**No. 43-2, Hatagaya 2-chome**
**Shibuya-ku Tokyo (JP)**
Inventor: **Shishido, Yoshio Olympus Optical Co.**
**Ltd.**
**No. 43-2, Hatagaya 2-chome**
**Shibuya-ku Tokyo (JP)**
Inventor: **Kato, Shinichi Olympus Optical Co.**
**Ltd.**
**No. 43-2, Hatagaya 2-chome**
**Shibuya-ku Tokyo (JP)**
Inventor: **Takahashi, Susumu Olympus Optical**
**Co. Ltd.**
**No. 43-2, Hatagaya 2-chome**
**Shibuya-ku Tokyo (JP)**

Courier Press, Leamington Spa, England.

**0 089 804**

(72) Inventor: **Nakamura, Takeaki Olympus Optical Co. Ltd.
No. 43-2, Hatagaya 2-chome
Shibuya-ku Tokyo (JP)**
Inventor: **Ishikawa, Akibumi Olympus Optical Co. Ltd.
No. 43-2, Hatagaya 2-chome
Shibuya-ku Tokyo (JP)**

(74) Representative: **Kennedy, Victor Kenneth et al
G.F. REDFERN & CO. Marlborough Lodge
14 Farncombe Road
Worthing West Sussex BN11 2BT (GB)**

## Description

This invention relates to focus state detectors having light receiving means so formed that mutually different levels of light reach respective light receiving surfaces from an object to be viewed or photographed, the respective levels depending on distance from the object.

Generally, in optical observing devices or optical photographic devices for endoscopes, cameras and television cameras, it is a common practice to provide focus state detecting means to determine whether the optical system of the device is in a correctly focussed state, in which an image is clearly formed on a predetermined image forming surface, such as a film surface, for the particular distance from an object that is to be viewed or photographed, so that the object image is clearly defined.

In some cases an automatic focus setting device may be provided, which can automatically move the element or elements of the optical system to the correct focus setting.

In known focus state detector devices, if the object to be viewed or photographed is dark, the detector output of the light receiving element may be so small that focus state detection will be substantially impossible.

One known proposal is described in the European Patent Application No. 0 010 241 A2, which describes and claims distance sensing apparatus for determining the distance of an illuminated surface from the apparatus, said apparatus comprising lens means for forming an image of said illuminated surface and photoelectric detection means the apparatus being characterised by first and second photoelectric converters respectively disposed at first and second image planes of said lens means, said first and second image planes respectively corresponding to first and second object planes equivalent to near and remote possible locations of said illuminated surface from the apparatus, whereby the light falling on the first and second photoelectric converters depends on the location of the illuminated surface, and by processing means for processing the output signals from said first and second photoelectric converters to produce a single output signal representative of the distance of said illuminated surface from the apparatus.

Thus each photoelectric converter is associated with one specific focussing plane, and the respective incident light levels indicate at which plane or intermediate location the illuminated surface lies, which limits the design possibilities by denying freedom of choice for the sensor positioning, and the sensors must be associated with different distances, as is emphasized on page ten of that document commencing at line three.

A focus state detecting device wherein lights are projected onto an object to be photographed by a pulsed light source, and the output signals in the extinguished sections deducted from the output signals in the lighted sections, so that the influences of external lights other than the light source may be reduced, so that, even in cases where the object to be photographed is dark, or in the case of a dark ground optical system, the focus state can still be detected, is described in the Gazette of Japanese Patent Laid Open No. 125713/1981. However, in this proposal besides a predetermined image forming surface, such as a film surface, separate positions conjugate with this image forming surface are provided in two places to each side of the image forming surface so that a light projected onto an object to be photographed by a light projecting means arranged in one place may be received by a light receiving means arranged in the other place. Therefore, in this prior art example, there have been problems that comparatively large spaces are required for the light projecting means, and the formation of the optical system and the circuit required for focus state detection become complicated and costly.

One object of the present invention is to provide a focus state detector which can be used for dark objects, or. with dark ground optical systems, having a simple structure and low cost, and requiring only a small space.

In accordance with one preferred exemplary embodiment of the present invention there is provided a focus state detector in which an objective lens is provided to form an image of an object to be viewed or photographed in a predetermined image plane, comprising a light source to project a light spot onto said object via said objective lens, and a plurality of photoelectric transducers arranged before and behind said image plane, characterised in that said photoelectric transducers are arranged at the periphery of the light source and are of sufficient size to receive different light intensities in the unfocussed state of the objective lens.

In accordance with another aspect, a preferred exemplary embodiment of the present invention has a plurality of photoelectric transducers arranged an equal distance from said image plane, and is further characterised in that said photoelectric transducers are arranged at the periphery of the light source and are of sufficient size to receive different light intensities in the unfocussed state of the objective lens, and that there is arranged in front of at least one transducer a filter member whose transmission is dependent upon the angle of incidence, said filter being either a plate formed by cutting a slice from an optical fiber bundle at an angle inclined to the fiber direction, or a plate formed by cutting a slice from a member consisting of overlapping transparent laminar layers at an angle inclined to the direction of the layers.

The invention will now be described with reference to the drawings, in which:—

Figure 1 is an extraordinary schematic view showing a focus state detector and setting device as used in a first exemplary embodiment of the present invention;

Figure 2 is a block-schematic circuit diagram showing details of the circuit used in the embodiment shown in Figure 1;

3

Figure 3 is an explanatory schematic view showing the arrangement of the focus state detector elements in a second exemplary embodiment of the present invention;

Figure 4 is a front view of the arrangement of three light receiving elements, as used in a third exemplary embodiment of the invention;

Figure 5 is an explanatory side view of the arrangement shown in Figure 5;

Figure 6 is an explanatory side view showing the formation of a focus state detector used in a fourth exemplary embodiment of the present invention;

Figure 7 is an explanatory side view showing details of a fifth exemplary embodiment of the present invention; and

Figure 8 is an explanatory schematic view showing the formation of a focus state detector and setting device as used in a sixth exemplary embodiment of the present invention.

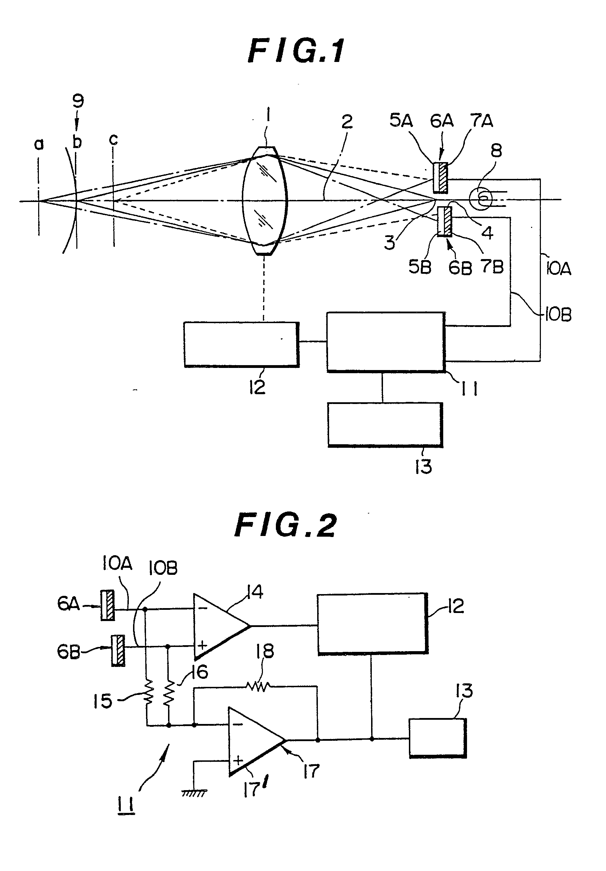

In the embodiment shown in Figure 1, photoelectric transducer elements 6A and 6B, having respective light receiving surfaces, 5A and 5B, are arranged one in a position slightly forward of and one slightly to the rear of a position 3 on the optical axis 2 of an objective lens 1, which position 3 is optically conjugate with a predetermined image forming surface, such as a film surface (not illustrated) to the rear of the objective lens 1 on its optical axis 2 or on a deflected extension of that path. The transducers lie on opposite sides of the optical axis 2 spaced apart to define an aperture 4.

Respective light intercepting plates, 7A and 7B, cover the back surfaces of the light receiving surfaces 5A and 5B to prevent any light projected from behind the transducer elements 6A and 6B being incident upon the transducers before it has been projected to the object 9 through the aperture 4 and the objective lens 1 from a light source 8 arranged on the optical axis 2 or its deflected extension to the rear of the aperture, and subsequently been reflected back to be incident directly upon the light receiving surfaces 5A and 5B.

The photoelectric transducer elements 6A and 6B have a photoelectric converting function, either by varying the current characteristics with the light, for example, photo-diodes and phototransistors, or elements generating electromotive force, such as solar batteries, or elements varying the resistance value with the light, such as CdS cells, so that the signals produced in response to the detected light levels may be fed to the focus state detector circuit 11 through respective output signal lines, 10A and 10B.

The focus state detector circuit 11 forms an automatic focus setting corrector device, wherein the focus state is detected, and if correct focus is not set, a correcting signal will be fed out to a lens driving device 12 to move the objective lens 1 to the correct focus position, and when the focus is correctly set an indicator signal will be fed out to a focus state indicating circuit 13 to inform the observer that a correct focus state is set.

The focus state detector circuit 11 is shown in Figure 2.

The output signals from the respective transducer elements 6A and 6B are fed to respective inputs of a comparator 14, formed by a differential amplifier or the like. Three positions can be distinguished for the objective lens 1, when determining its focusing state with regard to an object 9 that is to be photographed. If set to focus at the position indicated by the reference "a", the lens 1 forms an unfocussed optical image of the object in a position forward of the required focusing plane, the theoretical focus points of the lens 1 being shown by chain-dotted lines which cross before the required plane and become divergent. The correct position, indicated by the reference "b", forms a clear image in the required plane, as indicated by solid lines. If set to focus at a position "c", nearer than the actual position "b" of the object then, as indicated by dashed lines, a focussed image would be formed in a plane to the rear of the transducer elements. The outputs of the transducer elements are compared to determine which, if either, is the highest, and in the case of an incorrect focus setting, this comparison directly indicates the required direction for correction. The lens driving device 12 is then operated to move the lens as required, and at the correct setting the indicator circuit 13 responds.

The outputs of the two transducer elements, 6A and 6B, are also fed in parallel to the inverting input of a differential amplifier 17', forming an adder 17, through respective resistances 15 and 16. This input is connected to the output of the amplifier 17' through a gain controlling resistance 18, and the non-inverting input is earthed. This adder 17 will add together the detected output levels from the two transducer elements, 6A and 6B, and will feed the amplified resultant from its output, giving a signal of a size proportional to the displacement of the two transducer elements, 6A and 6B, from the correct focus state. This output is fed to the control input of the lens driving device 12 to automatically control the forward or rearward movement of the lens 1 so that the lens 1 may be automatically set in the focusing position. The output of the adder 17 is of reversed polarity to the input polarity. In order to prevent the added output fed via resistance 18 from reversing, the input fed from the resistances 15 and 16 may be connected to a non-inverting input, the gain control resistance 18 may be connected to the inverting input, which is then earthed through a resistance.

When the lens 1 is in a correct focus state, the outputs of both transducer elements, 6A and 6B, will be at a minimum, and therefore the output of the adder 17 will be also of a minimum value, ideally at zero level. In this case, the focus indicator circuit 13 will operate to illuminate a LED or the like, or will indicate correct focus by an acoustic signal, such as a buzzer. When one input of a comparator (not illustrated) is set at a level slightly higher than the output level of the adder 17 in the correct focus state within the focus indicator circuit 13, and the output from the adder 17 is fed into the other input, the output of the comparator will reverse, depending on whether correct focus is made or not, and therefore the focus state can be detected. Further, the other input of the differential amplifier 17' in Figure 2 can be set to a level slightly higher than that of the added level of the output from both transducer elements, 6A and 6B, at the time of correct focus so that, at the time of correct focus, the added output may be of a reversed polarity to that when the image is not correctly focussed.

The operation of the thus formed first embodiment of the present invention is as follows.

If it is assumed that correct focus will be obtained when the object 9 to be photographed is in the position of the reference "b", the spot of light projected onto the object 9 through the aperture 4 by the light source 8 will form an image at the position 3 conjugate with a predetermined image forming surface, intermediately between the positions of the two transducer elements, 6A and 6B, which are arranged so that the optical path lengths are slightly different, and therefore the outputs of both transducer elements, 6A and 6B, will be at a minimum, the output of the focus state detector circuit 11 will be at a minimum, and the focus state indicator circuit 13 will respond to indicate correct focusing.

On the other hand, if the object 9 to be photographed is in the position indicated by the reference "a", in front of the position "b", the light projected onto the object 9 from the light source 8 will illuminate an expanded area and the reflected light will form an image forming before it reaches the transducer elements 6A and 6B, as indicated by the chain-dotted lines in Figure 1, so that the rays expand to form a divergent beam that will be incident on the surfaces, 5A and 5B, of both the transducer elements, 6A and 6B. In this case, the light level incident upon the light receiving surface 5A, positioned a little forward, will be smaller than that on the surface 5B, due to the larger area on which light will fall. Therefore the output of the comparator 14 in the focus state detector circuit 11 will be positive with the circuit as shown in Figure 2, and the lens driving device 12 will be operated to move the lens 1 back towards the transducer elements 6A and 6B. The displacement of the lens 1 will be detected by the output level of the adder 17 and the lens 1 will be automatically set when in the correct focus state.

Contrary to the above, if the object 9 to be photographed is in the position indicated by the reference "c", an image would be formed by the light projected and reflected from the object 9 to the rear of the two transducer elements 6A and 6B, if that were possible, as indicated by the broken lines, the light still being convergent at the transducer surfaces, and therefore the magnitudes of the respective outputs of the two transducer elements 6A and 6B will be reverse to the above (that is, the output of the transducer element 6A will be larger than that of the transducer element 6B), because the element 6A will have the larger area of incident light. Therefore, the output level of the comparator 14 will be the reverse to that described above, and the lens 1 will be moved in the reverse direction to be automatically set when in the correct focus position, at which time the focus state indicator circuit 13 will display the correct focus signal.

The focus state detector circuit 11 shown is only one example of focus detector, and the circuit can be formed in different manners.

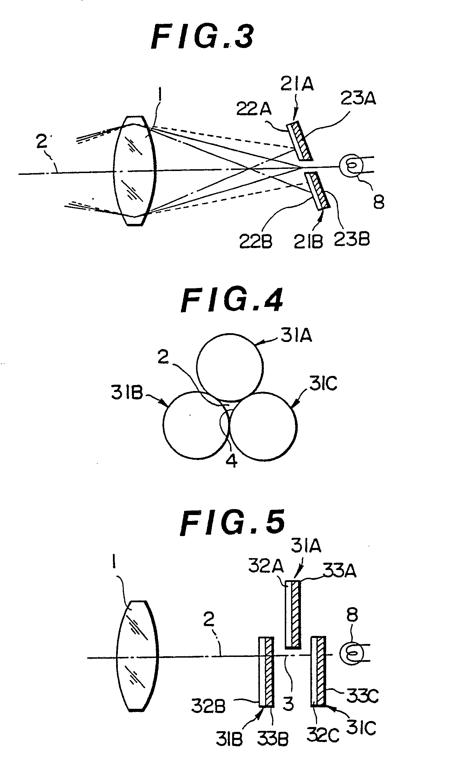

Figure 3 shows details of a second exemplary embodiment of the focus state detector for determining whether focus is correct or not.

In this case, the respective transducer surfaces, 22A and 22B, of two elements 21A and 21B of the same shape are slightly separated from each other at the optical axis, in the direction of the transducer surfaces 22A and 22B, and are not arranged normal to the optical axis, as was the case in the first described embodiment but are inclined to the optical axis 2 so that the light path lengths to the two transducer elements 21A and 21B differs slightly. In this second exemplary embodiment, as compared with the first described embodiment, the transducer elements 21A and 21B are not in a stepped arrangement, but are of the same shape, and lie flush with each other in a common plane, inclined so as to be able to function in substantially the same manner as the first described embodiment, whilst being easy to make and of reduced cost.

By merely varying the angle of inclination, the difference between the light path lengths to the two transducer elements 21A and 21B, and the respective light path lengths, can be varied within the light receiving arrangement and there is an advantage that the focus state detector precision can be adjusted, when in use.

If the respective back faces of the transducer elements 21A and 21B are covered with respective light intercepting plates 23A and 23B, any light projected onto the object 9 side from the light source 8 along the optical axis 2 from the rear will be intercepted by the plates 23A and 23B, and the outputs from both transducer elements 21A and 21B will be formed only by detection of reflected light and the detected signals fed to the circuit 11 as in the above described first embodiment, so that the focus state can be determined and indicated, and the correct focus state can be automatically set, if adjustment is necessary.

In the above described embodiments, two separate transducer elements, 6A and 6B or 21A and 21B, are used to detect the state of focus. However, a higher number can be used, as in the arrangement of a third exemplary embodiment, shown in Figures 4 and 5, where three light receiving surfaces 32A, 32B and 32C of respective transducer elements 31A, 31B and 31C, all of the same shape (disk-shaped in the illustration) are arranged in a stepped formation, as in the first embodiment at respective, slightly different light path lengths around the optical axis 2 and centred about position 3 that is optically conjugate with a predetermined image forming surface on the optical axis 2 or a deflected extension thereof. For example, the light receiving surface 32A of the transducer element 31A is positioned in alignment with the point 3 and normal to the axis 2, and the elements 31B and 31C are arranged respectively to the front and to the rear of this position 3.

In detecting the focus state using this embodiment, the outputs, of the light receiving elements 31B and 31C are compared with each other, for example, to determine whether the lens 1 is displaced forward or rearward from the correct focus position and this is detected by the compared outputs, the output of the element 31A being deducted from the outputs of the respective elements 31B and 31C, so that displacement from the correct focus position will be able to be detected, and if the lens 1 is moved by these output signals, the lens 1 will be able to be automatically set in the correct focus position, as described above, Instead of a stepped array of three elements, each in a respective plane normal to the optical axis, an arrangement with three elements inclined in the manner shown in Figure 3 would be used.

Many separate light receiving transducer elements can be arranged, stepped or inclined, so that the light path length to each is slightly different, and if it is detected by comparing the outputs of those light receiving elements that the position on the optical axis of the light receiving element in the position to be on the minimum level is the image forming position of the lens in its present setting, and this position is different from the position of the predetermined image forming surface, the lens can then be moved so that correct focus may be set for the position of the predetermined image forming surface. In this case, many light receiving elements will be required, but those having light receiving surfaces of the same shape slightly separated from one another, as in the second embodiment, may be arranged as merely inclined and therefore there is an advantage that they can be simply manufactured.

The aperture 4 required on the optical axis for detecting whether correct focusing exists or not can be slit-shaped, groove-shaped, or may be an optical aperture in a physical barrier, such as a light transparent window.

According to the above described first to third embodiments, light is projected as a spot onto the object 9 through the aperture (such as 4) of the light receiving means and the objective lens 1, the light reflected back by the object 9 is received by the light receiving surfaces such as 6A and 6B arranged around the aperture so as to have light path lengths that are slightly different from each other and the electrical output signal of the photoelectric transducers produced by the incident reflected light is fed to the comparator 14 or the like to be able to detect whether the lens 1 is in the correct focus state or not. If it is not in the correct focus state, it detects in what direction and to what degree the lens 1 is to be moved to be in the correct focus state. Therefore, by providing the driving means, the lens 1 can be moved to be set in the correct focus state.

The structures described above are so simple that they can be made at a low cost. As the optical distances to the respective light receiving surfaces are made slightly different, even if the lens 1 is only slightly deviated from the correct focus state, the out-of-focus condition can be detected and focus state detection to high precision is made possible.

There are many additional advantages as the device is not bulky, can be contained in a small space, and can be incorporated in many optical instruments.

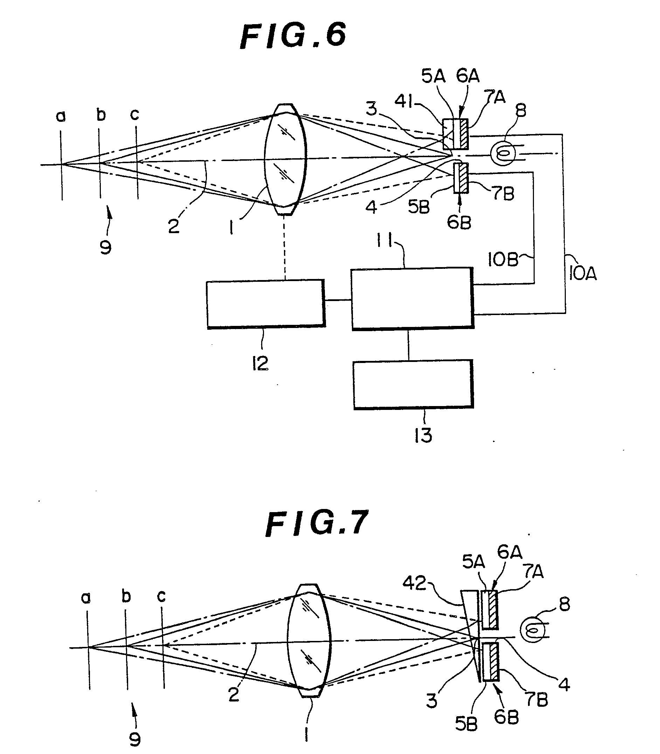

Figure 6 shows a fourth exemplary embodiment, wherein the respective transducer elements 6A and 6B of the first embodiment are not arranged in a stepped formation, but are flush with each other in a common plane, and the optical path length of at least one is adjusted by the addition of a transparent member arranged on the front surface of that one element, 6A in this case.

Thus, two identical transducer elements, 6A and 6B, are arranged slightly separated from each other in their light receiving surface direction (that is, in the direction normal to the optical axis 2) so that the light path lengths from the object 9 to both light receiving surfaces 5A and 5B may be equal, but the addition of a plate-shaped transparent member 41 having an appropriate thickness to the face of the light receiving surface 5A of one transducer element (6A in the illustration) makes the light path length to the element 6A slightly larger than the light path length to the light receiving surface 5B of the transducer element 6B, on which an additional transparent member 41 is not provided. The additional member may be optical glass, or a transparent paint or the like may be applied. Obviously, each element, 6A and 6B can have a respective additional transparent member, if these are mutually different thicknesses, or if differing materials to differently effect the optical path lengths.

Thus, it is a feature of the present embodiment that, by pasting or arranging the transparent member 41 on the light receiving surface 5A of one light receiving element 6A, the light path lengths of the identical elements are made slightly different from each other. In the case of using the light receiving elements for focus state detection, they are so arranged that the intermediate position of these slightly different light path lengths may be the position 3 that is conjugate with the image forming surface as shown, for example, in Figure 5.

The signals corresponding to the light levels incident on the light receiving surfaces 5A and 5B of the transducer elements 6A and 6B are fed into the focus state detector circuit 11 through the respective signal lines 10A and 10B.

The focus state detector circuit 11 can be formed as shown in Figure 2. The operation of this fourth embodiment is substantially the same as that of the first embodiment. However, the respective photoelectric transducer elements 6A and 6B of Figure 1 correspond to the photoelectric transducer elements 6B and 6A of Figure 6.

Figure 7 shows details of a fifth exemplary embodiment of the present invention, wherein a wedge-shaped prism 42 is arranged in front of both light receiving surfaces 5A and 5B to form light receiving means, instead of the transparent member having an appropriate thickness between plane parallel faces and arranged on the front surface of one light receiving surface 5A, as in the fourth embodiment.

As the wedge-shaped prism 42 is arranged with a thicker portion covering one light receiving surface 5A and a thinner portion covering the other light receiving surface 5B, by varying the amount of refraction of light incident from the object 9, the light path lengths to one light receiving surface 5A and to the other light receiving surface 5B are made to be slightly different, and in the illustrated embodiment the light receiving surface 5A is effectively arranged slightly forward of the light receiving surface 5B.

The other parts are the same as in the fourth embodiment. In this embodiment, if the light projected onto the object 9 from the light source 8 is passed through the wedge-shaped prism 42, the light will deviate from the optical axis and therefore, when the light source 8 is arranged to the upper side of the axis 2 at the rear of the aperture 4 the light from that position will be projected out on the optical axis toward the object 9.

When the wedge-shaped prism 42 is arranged, the light path lengths to the two light receiving surfaces 5A and 5B will be made slightly different from each other, and therefore the operation of this fifth embodiment will be substantially the same as for the above mentioned first or fourth embodiments.

With the fifth exemplary embodiment, there are advantages that, depending on the position in which the wedge-shaped prism 42 is arranged, that is, depending on whether the prism 42 is arranged in contact with or forward of both light receiving surfaces 5A and 5B, the amounts of deviations of the light path lengths to both light receiving surfaces 5A and 5B can be easily varied, or can be differently adjusted by inclining the prism 42. Instead of a rectilinear prism, a wedge-shaped lens formation can be used.

In the above description of the fourth and fifth exemplary embodiments, two elements 6A and 6B are used to detect the focus state, but three or more can be used in a common formation. In this case, light receiving elements of the same shape are arranged slightly separate from one another so as to surround the optical axis above and below, and to the right and left, and a respective transparent member 41 is arranged as in the fourth embodiment on each selected one of the light receiving surfaces of the respective light receiving elements, or on all the light receiving elements except one, so that the light path lengths to the respective light receiving surfaces may be slightly different from one another and the light levels received by the respective light receiving surfaces will be different from one another.

Alternatively, as shown in the fifth embodiment, a number of wedge-shaped prisms 42 are arranged so that the light path lengths to the respective light receiving surfaces may be slightly different from one another. In the focus state detector circuit for use with three or more light receiving surfaces, for example, one light receiving surface is arranged in the position 3 conjugate with the image forming surface, and the other light receiving surfaces are arranged to the front and rear of the position 3, and the outputs of the respective light receiving surfaces (light receiving transducer elements) are compared to detect which element has the minimum output level, so that the focusing position of the lens 1 may be known. Therefore, if the difference between the output of this element and the output from the light receiving element arranged in the position conjugate with the image forming surface is detected, the amount of deviation from the correct focus position can also be detected and the lens 1 can be moved to the correct focus position by this detected output.

The arrangements described for the fourth and fifth exemplary embodiments can be combined in a common arrangement, if so required.

The light receiving elements 6A and 6B are described as respective, different light receiving transducer elements, but can be formed as a single element having a plurality of transducer surfaces formed on a common carrier plate.

According to the above described fourth or fifth embodiments, transparent members giving different effective light path lengths can be arranged on at least one light receiving element having a plurality of light receiving transducer surfaces slightly separated from one another, or a wedge-shaped prism or lens or the like can be arranged over a plurality of light receiving transducer surfaces so that the refractive indices of the light paths from the object may be substantially different and the light path lengths to the respective light receiving transducer surfaces may be respectively slightly different, and therefore there is an advantage that the state of focusing can be detected easily with a high precision using a simple construction.

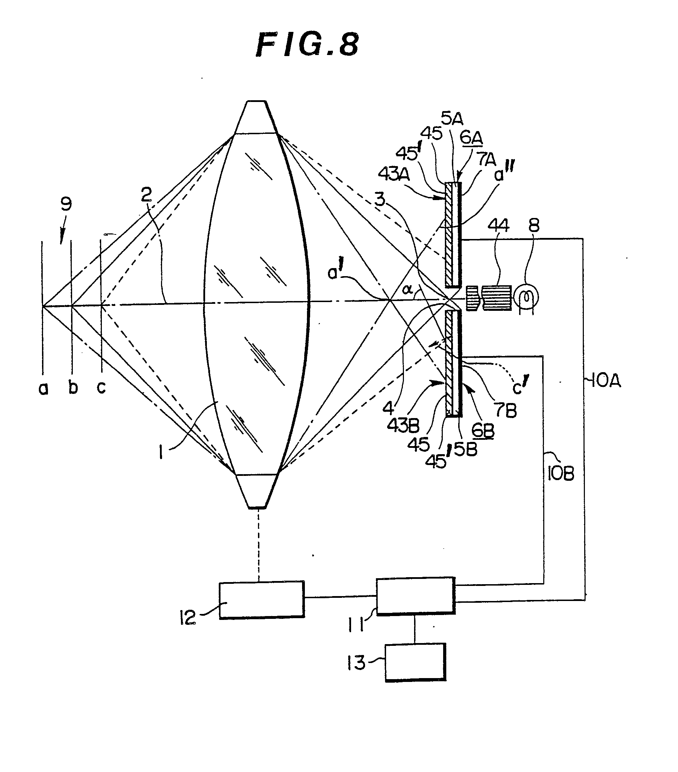

Figure 8 shows a sixth exemplary embodiment wherein a separate directional-selective filter is arranged in front of each light receiving surface, so that the received light level differs with the angle of incidence of the light, which is related to the distance from the object that is to be viewed or photographed.

That is to say, filters 43A and 43B act as light level adjusting members forming essential parts of the sixth embodiment, each being bonded to or arranged in a common plane on or before the respective light receiving surfaces 5A and 5B and light intercepting plates 7A and 7B are bonded to the backs of the respective transducer elements 6A and 6B so that light projected from the light source 8 for focus state detection, possibly through a light guide (fibres) 44, is projected through the aperture 4 formed by slightly separating the transducers from each other, and is prevented by the light intercepting plates 7A and 7B from being received directly on the transducers. The light source 8 need not incorporate a light guide, but may directly project the light.

The two filters, 43A and 43B, are each formed of a plate obtained by cutting a composite bunch of optical fibres at a large angle of inclination to the plane normal to the fibre direction, and has the respective plates of composite fibre portions 45 arranged in parallel directed in a direction inclined to the optical axis 2, as illustrated.

As each periphery 45', and therefore the longitudinal axis of each fibre portion 45, is arranged to make a large angle of inclination $\alpha$ with respect to the optical axis 2, then it will depend on the direction of any light incident upon a filter, 43A or 43B, whether the light is reflected at the surface 45', or have at least a component part transmitted directly to, or deflected to the light receiving surfaces, 5A or 5B, and where there is symmetry with respect to the axis 2, the portions passed will be different for each of the two filters 43A and 43B.

That is to say, the light incident at a small angle with respect to the longitudinal axis of a direction of the fibre of the fibre portion 45 will proceed on to the light receiving surface, 5A or 5B, to the rear of the filter, either directly or after repeated reflection at the periphery 45' of the fibre but light incident at a large angle will be reflected back at the surface 45' and will not reach the light receiving surface 5A or 5B at the rear of the filter. This is a feature of the sixth embodiment of the present invention.

As the angle and the area of light incident upon the filters 43A and 43B differs as the distance of the object 9 is changed, the light received through each filter will depend upon the distance from the object 9.

The respective outputs of the transducer elements 6A and 6B are connected via the signal lines 10A and 10B to the inputs of the focus state detector circuit 11, which may be designed as shown in Figure 2.

The principle of detecting the focus state and setting the lens 1 at a correct focus point if the focus is not correct in the thus formed sixth embodiment of the present invention is as follows.

If it is assumed that when the object 9 is in the position of the reference "b", the lens is in the correct focus state, then light projected onto the object 9 from the light source 8 and reflected by the object 9 when in the position of the reference "b" will form an image at the position 3 conjugate with the image forming surface, as shown by solid lines, and therefore the outputs of both transducer elements 6A and 6B will become at a minimum, the output of the focus state detector circuit 11 will be at a minimum, and the focus state indicating circuit 13 will respond to indicate correct focus.

On the other hand, if the object 9 is in a position indicated by reference "a" at a distance farther than that for correct focus, or if the lens is focussed at a small distance to the rear of the actual position of the object, the light projected onto the object 9 from the light source 8 and reflected will form an image at a position a' well before it reaches the two transducer elements 6A and 6B, as shown by the chain-dotted lines in Figure 8, and then diverges to be incident upon the respective filters 43A and 43B. In this case, some of the light incident upon the filter 43A will be reflected by the front face of the filter 43A, and any light entering the fibre-portions 45 will be refracted, and when incident upon the periphery 45' of a fibre portion 45, it will be reflected back out of the filter, so that little of the incident light can pass through the filter to the light receiving surface 5A, and this applies especially to the light indicated by the reference "a" in Figure 8 which is virtually normal to the periphery 45' of any fibre portion. Reflected light will proceed back to emerge from the front, and will not be received at the light receiving surface 5A.

On the other hand, any light that has entered the filter 45B, will pass directly down its fibres, or pass down by repeated internal reflection to be received at the light receiving surface 5B of the transducer element 6B.

Therefore, in this case, the light level incident on the light receiving transducer element 6B will be larger than that incident on the light receiving transducer element 6A, and the output of the light receiving transducer element 6B is the larger.

Therefore, the output of the comparator 14 (see Figure 2) in the focus state detector circuit 11 will become positive, and will operate the lens driving device 12 to move the lens 1 towards the two light receiving transducer elements, 6A and 6B, (that is, rearwardly on the optical axis. The displacement produced by moving the lens 1 will be indicated by the output level of the adder 17 shown in Figure 2 and the lens 1 will be automatically set when in the correct focusing state.

Contrary to the above description, if the object 9 is in the position indicated by the reference "c", the image forming position of projected light reflected from the object 9 will be to the rear of the two light receiving transducer elements 6A and 6B.

In this case, most of the light incident upon the filter 43A will reach the light receiving surface 5A to the rear, and so produce a relatively large output from the transducer 6A.

On the other hand, any light incident upon the filter 43B that enters the fibre portions 45 will be reflected by the fibre portion surface 45', and some will be incident from the rear side of the line normal to the surface 45', and thus be reflected back to the front face and will not reach the light receiving surface 5B, as is indicated by the broken line c' in Figure 8.

Therefore, if the object is in the position indicated by the reference "c", the light level incident upon the light receiving transducer element 6A will be larger than that received by the light receiving transducer element 6B, in opposition to the above described case for a body at the position indicated by reference "a".

Therefore, the output level of the comparator 14 will also be reversed relative to the preceding description, and the lens 1 will be moved in the forward direction along the optical axis until automatically set in the correct focus position, when the focus state indicating circuit 13 will signal the correct focus state.

In the above description of the sixth embodiment, the filters 43A and 43B are said to be formed of fibre portions 45. However, they may be made of layered portions made by cutting a multi-layered film-like member at an angle inclined with respect to the layer direction, to function in substantially the same manner.

Further, in the above described embodiment, both filters, 43A and 43B, are so arranged that the directions of the respective fibre portions 45 (or layer portions, if that be the case) are both directed in the same direction, but this is only by way of example. Even if the filters are so arranged that the fibre portions (or layers) are set in different directions, providing that the transmission characteristics of both filters 43A and 43B differ in a manner depending on the incident direction, it will be possible to detect whether the focus state is correct or not, and also to detect the direction of any focus-correcting adjustment that may be necessary.

Furthermore, even if only one of the filters 43A and 43B is made so as to be dependent on the direction, and the other is either not so dependent, or is completely omitted, it will still be possible not only to detect whether the state of focus is correct or not, but also to determine the direction of any required focusing adjustment. As a final alternative that should be mentioned, filters 43A and 43B can be formed by cutting a plate from a crystal whose transmission characteristics differ depending on the crystal axes.

The required transmission characteristics for the filters 43A and 43B are that light which is incident as a divergent or a convergent beam is differently reflected by the surface 45' of the fibre portion 45 or the like, so that reflected light is effectively separated, passing onward to be detected in one case, and reflected back in the other, or that the transmission differs depending on the direction of the crystal cut.

In both light receiving transducer elements 6A and 6B, the respective light receiving surfaces 5A and 5b are arranged normal to the optical axis 2, in the embodiment shown in Figure 8, but may be inclined so that the respective light path lengths are substantially equal but can be differently exposed, or arranged so that the light path lengths may be different.

The respective input surfaces of the filters 43A and 43B need not be arranged normal to the optical axis 2, but can themselves be inclined.

In the above mentioned sixth embodiment, two light receiving transducer elements 6A and 6B are used, but a larger number of light receiving transducer elements can be used to detect the state of focusing. In this case, if several filters whose direction of the fibre portions 45 or the like differ are used, the direction of the incident light can be detected.

If the lens 1 has a relatively short focal length, the state of focusing can be detected to a high precision. For example, in the sixth embodiment described, in the correct focus state, light will not be received at either of the light receiving surfaces 5A and 5B, but as a lens 1 of short focal length is deviated from the correct focus state, the light will expand at a large angle, and therefore the difference produced due to the transmission characteristics will become large, in accordance with the large angle. Therefore, if the lens 1 is the objective lens of a photographic optical system, or a part thereof, which system has a relatively long focal length, when the image is formed in the position 3 or a plane optically conjugate therewith, the predetermined image forming surface and a further lens of a relatively short focal length may be used for focus state detection, forming an image for focus state detection to the rear and the precision of focus state detection will be improved.

Further, in the present invention, if infrared wavelengths are produced by the light source 8 for focus state detection to reduce the influences of external lights, the signal-to-noise ratio will be improved and focus state detection at a high precision will become possible. It is evident that, in this case, light receiving transducer elements sensitive to infrared will be used. Further, if a pulsed light source 8 is used and the resultant alternating current is amplified, it will be possible to further reduce the influences of external lights and to detect the state of focus with high precision.

## Claims

1. A focus state detector in which an objective lens (1) is provided to form an image of an object (9) to be viewed or photographed in a predetermined image plane, comprising a light source (8) to project a light spot onto said object (9) via said objective lens (1), and a plurality of photoelectric transducers (6A, 6B) arranged before and behind said image plane, characterised in that said photoelectric transducers (6A, 6B) are arranged at the periphery of the light source (8) and are of sufficient size to receive different light intensities in the unfocussed state of the objective lens (1).

2. A focus state detector as claimed in Claim 1, characterised in that said transducers (6A, 6B) are arranged at the same distance from the image plane and a parallel transparent plate (41) is positioned in front of one transducer (6A) to vary the light path length. (Fig. 6).

3. A focus state detector as claimed in Claim 1, characterised in that said transducers (6A, 6B) are arranged with their respective light receiving surfaces inclined to the optical axis (2) of the objective lens (1). (Fig. 3).

4. A focus state detector as claimed in Claim 1, characterised in that said transducers (6A, 6B) are arranged at the same distance from the image plane and a wedge-shaped prism (42) is arranged in front of said transducers (6A, 6B). (Fig. 7).

5. A focus state detector in which an objective lens (1) is provided to form an image of an object (9) to be viewed or photographed in a predetermined image plane, comprising a light source (8) to project a light spot onto said object (9) via said objective lens (1), and a plurality of photoelectric transducers (6A, 6B) characterised in that said photoelectric transducers (6A, 6B) are arranged at an equal distance from said image plane, at the periphery of the light source (8) and are of sufficient size to receive different light intensities in the unfocussed state of the objective lens (1), and that there is arranged in front of at least one transducer (6A, 6B) a filter member (43A, 43B) whose transmission is dependent upon the angle of incidence, said filter being either a plate formed by cutting a slice from an optical fibre bundle at an angle inclined to the fiber direction, or a plate formed by cutting a slice from a member consisting of overlapping transparent laminar layers at an angle inclined to the direction of the layers. (Fig. 8).

6. A focus state detector as claimed in Claim 1 or Claim 5, characterised in that said light source projects light of a wavelength in the visible range.

7. A focus state detector as claimed in Claim 1 or Claim 5, characterised in that said light source projects light of a wavelength in an infrared range.

8. A focus state detector as claimed in Claim 1 or Claim 5, characterised in that automatic setting means are provided to adjust the objective lens under the control of output signals from said transducers to achieve a correct focus state.

**Patentansprüche**

1. Fokuszustandsanzeigeeinrichtung, bei der eine Objektivlinse (1) vorgesehen ist, um das Bild eines zu erkennenden oder zu photografierenden Objektes (9) in einer vorbestimmten Bildebene abzubilden und die weiterhin eine Lichtquelle (8) aufweist, die einen Lichtpunkt durch die Objektivlinse·(1) auf das Objekt (9) projeziert und bei der eine Mehrzahl von photoelektrischen Wandlern (6A, 6B) vor und hinter der Bildebene angeordnet sind, dadurch gekennzeichnet, daß die photoelektrischen Wandler (6A, 6B) an der Peripherie der Lichtquelle (8) angeordnet und so bemessen sind, daß sie unterschiedliche Lichintensitäten im nicht fokussierten Zustand der Objektivlinse (11) empfangen.

2. Fokuszustandsanzeigeeinrichtung nach Anspruch 1, dadurch gekennzeichnet, daß die Wandler (6A, 6B) in dem selben Abstand von der Bildebene angeordnet sind und daß eine parallele transparente Platte (41) zur Veränderung der Länge des Lichtweges auf der Vorderseites eines Wandlers (6A) vorgesehen ist (Fig. 6).

3. Fokuszustandsanzeigeeinrichtung nach Anspruch 1, dadurch gekennzeichnet, daß die Wandler (6A, 6B) mit ihren lichtempfangenden Oberflächen geneigt zur optischen Achse (2) der Objektivlinse (1) angeordnet sind (Fig. 3).

4. Fokuszustandsanzeigeeinrichtung nach Anspruch 1, dadurch gekennzeichnet, daß die Wandler (6A, 6B) im selben Abstand von der Bildebene angeordnet sind und daß vor den Wandlern (6A, 6B) ein keilförmiges Prisma (42) angeordnet ist (Fig. 7).

5. Fokuszustandsanzeigeeinrichtung, bei der eine Objektivlinse (1) vorgesehen ist, um das Bild eines zu erkennenden oder zu photografierenden Objektes (9) in einer vorbestimmten Bildebene abzubilden, und die weiterhin eine Lichtquelle (8) aufweist, die einen Lichtpunkt durch die Objektivlinse (1) auf das Objekt projiziert und bei der eine Mehrzahl von photoelektrischen Wandlern (6A, 6B) vorgesehen sind, dadurch gekennzeichnet, daß die photoelektrischen Wandler (6A, 6b) im gleichen Abstand von der Bildebene angeordnet sind, und zwar an der Peripherie der Lichtquelle (8) und so bemessen sind, daß sie unterschiedliche Lichtintensitäten im nicht fokussierten Zustand der Objektivlinse (1) empfangen, und daß vor wenigstens einem der Wandler (6A, 6B) ein Filter (43A, 43B) vorgesehen ist, dessen Durchlässigkeit vom Einfallswinkel abhängt und daß der Filter entweder aus einer von einem optischen Faserbündel unter einem Winkel zur Faserachse abgeschnittenen Scheibe oder aus einer Platte besteht, die aus einer Scheibe besteht, die von einem Teil bestehend aus sich überlappenden, transparenten laminaren Lagen, unter einem Winkel zur Richtung der Lagen abgeschnitten worden ist (Fig. 8).

6. Fokuszustandsanzeigeeinrichtung nach den Ansprüchen 1 oder 5, dadurch gekennzeichnet, daß die Lichtquelle Licht mit einer im sichtbaren Bereich liegenden Wellenlänge erzeugt.

7. Fokuszustandsanzeigeeinrichtung nach den Ansprüchen 1 oder 5, dadurch gekennzeichnet, daß die Lichtquelle Licht mit einer im infraroten Bereich liegenden Wellenlänge erzeugt.

8. Fokuszustandsanzeigeeinrichtung nach den Ansprüchen 1 oder 5, dadurch gekennzeichnet, daß automatische Einstellmittel vorgesehen sind, die die Objektivlinse gesteuert von dem Ausgangssignal des Wandlers auf den richtigen Fokuszustand einstellt.

**Revendications**

1. Détecteur d'état de mise au point, dans lequel il est prévu une lentille d'objectif (1) servant à former une image d'un objet (9) devant être observé ou photographié dans un plan image prédéterminé, incluant une source de lumière (8) destinée à projeter une tache de lumière sur ledit objet (9) à travers ladite lentille d'objectif (1), et une pluralité de transducteurs photoélectriques (6A, 6B) disposés en avant et en arrière dudit plan image, caractérisé en ce que lesdits transducteurs photoélectriques (6A, 6B) sont disposés sur la périphérie de la source de lumière (8) et possèdent une taille suffisante pour recevoir différentes intensités lumineuses lorsque la lentille d'objectif (1) se trouve dans l'état de non mise au point.

2. Détecteur d'état de mise au point selon la revendication 1, caractérisé en ce que lesdits transducteurs (6A, 6B) sont disposés à la même distance du plan image, et qu'une plaque transparente à faces parallèles (41) est disposée en avant du transducteur (6A) afin de modifier la longueur du trajet de la lumière (Fig. 6).

3. Détecteur d'état de mise au point selon la revendication 1, caractérisé en ce que lesdits transducteurs (6A, 6B) sont disposés de telle sorte que leurs surfaces respectives de réception de la lumière sont inclinées par rapport à l'axe optique (2) de la lentille d'objectif (1). (Fig. 3).

4. Détecteur d'état de mise au point selon la revendication 1, caractérisé en ce que lesdits transducteurs (6A, 6B) sont disposés à la même distance du plan image et qu'un prisme en forme de coin (42) est disposé en avant desdits transducteurs (6A, 6B). (Fig. 7).

5. Détecteur d'état de mise au point dans lequel il est prévu une lentille d'objectif (1) servant à former une image d'un objet (9) devant être observé ou photographié dans un plan image prédéterminé, et incluant une source de lumière (8) servant à projeter une tache de lumière sur ledit objet (9) à travers ladite lentille d'objectif (1), et une pluralité de transducteurs photoélectriques (6A, 6B), caractérisé en ce que lesdits transducteurs photoélectriques (6A, 6B) sont disposés à une même distance dudit plan image, sur la périphérie de la source de lumière (8) et possèdent une taille suffisante pour recevoir différentes intensités lumineuses, lorsque la lentille d'objectif (1) est dans l'état de non mise au point et que devant l'un au moins des transducteurs (6A, 6B) se trouve disposé un élément de filtre (43A, 43B), dont la transmission dépend de l'angle d'incidence, ledit filtre étant soit une plaque formée par découpage d'une tranche d'un faisceau de fibres optiques selon un angle d'inclinaison par rapport à la direction des fibres, soit une plaque formée par découpage d'une tranche dans un organe constitué par des couches transparentes stratifiées superposées, selon un angle d'inclinaison par rapport à la direction des couches. (Fig. 8).

6. Détecteur d'état de mise au point selon la revendication 1 ou 5, caractérisé en ce que ladite source de lumière projette une lumière possédant une longueur d'onde située dans la gamme visible.

7. Détecteur d'état de mise au point selon la revendication 1 ou 5, caractérisé en ce que ladite source de lumière projette une lumière possédant une longueur d'onde située dans une gamme infrarouge.

8. Détecteur d'état de mise au point selon la revendication 1 ou 5, caractérisé en ce qu'il est prévu des moyens de réglage automatique permettant de régler la lentille d'objectif sous la commande de signaux de sortie délivrés par lesdits transducteurs afin d'obtenir un état de mise au point correct.

# FIG.1

# FIG.2

# FIG.3

# FIG.4

# FIG.5

# FIG.6

# FIG.7

# FIG.8